(19) Europäisches Patentamt / European Patent Office / Office européen des brevets

(11) **EP 3 361 345 B1**

(12) **FASCICULE DE BREVET EUROPEEN**

(45) Date de publication et mention
de la délivrance du brevet:
**20.03.2019 Bulletin 2019/12**

(21) Numéro de dépôt: **18151934.9**

(22) Date de dépôt: **16.01.2018**

(51) Int Cl.:
*G05D 1/06* *(2006.01)*　　*G05D 1/10* *(2006.01)*
*G01C 21/12* *(2006.01)*　　*G01C 21/16* *(2006.01)*
*G08G 5/02* *(2006.01)*　　*G05G 5/00* *(2006.01)*
*G06K 9/00* *(2006.01)*　　*G01C 23/00* *(2006.01)*
*G08G 5/00* *(2006.01)*　　*B64D 45/08* *(2006.01)*
*G05D 1/12* *(2006.01)*　　*B64C 27/57* *(2006.01)*
*H04N 7/18* *(2006.01)*　　*G06T 7/73* *(2017.01)*

(54) **SYSTÈME ET PROCÉDÉ D'AIDE À L'ATTERRISSAGE D'UN AÉRONEF, ET AÉRONEF CORRESPONDANT**

LANDEASSISTENZSYSTEM UND -VERFAHREN FÜR LUFTFAHRZEUG, UND ENTSPRECHENDES LUFTFAHRZEUG

A SYSTEM AND A METHOD FOR ASSISTING LANDING AN AIRCRAFT, AND A CORRESPONDING AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.02.2017 FR 1700134**

(43) Date de publication de la demande:
**15.08.2018 Bulletin 2018/33**

(73) Titulaire: **Airbus Helicopters**
**13725 Marignane Cedex (FR)**

(72) Inventeur: **SALESSE-LAVERGNE, Marc**
**13190 Allauch (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**WO-A1-2014/169354    US-A1- 2010 321 488**
**US-A1- 2016 378 121**

**Description**

La présente invention se rapporte au domaine des systèmes d'aide au pilotage et notamment d'aide à l'atterrissage des giravions, et aux procédés d'aide au pilotage associés. De tels dispositifs permettent de faciliter le guidage d'un giravion lors d'une phase d'approche pour atterrir sur une zone de poser pour giravion telle que notamment une hélisurface, un héliport, un hélipont ou en langue anglaise un helipad.

En effet, l'équipage d'un giravion peut avoir des difficultés pour identifier la zone de poser requise lorsque, par exemple, cette zone de poser est agencée sur un bâtiment, éventuellement mobile. Un tel bâtiment peut notamment prendre la forme d'un véhicule tel qu'un navire, une barge ou une plateforme comprenant plusieurs zones de poser distinctes.

Une telle identification de la zone de poser peut se révéler encore plus complexe lorsque la zone de poser se situe dans un ensemble de plusieurs bâtiments ou de plateformes géographiquement proches les uns des autres.

De plus, une zone de poser peut parfois se trouver au sein d'un environnement encombré et/ou peut présenter des dimensions restreintes.

Par exemple, une zone de poser d'une installation de forage en mer présente parfois une taille réduite. De plus, une telle zone de poser peut se trouver à proximité d'obstacles, comme des grues ou d'autres structures métalliques.

Pour faciliter l'atterrissage sur une telle zone de poser, un aéronef peut comprendre un système d'aide au pilotage guidant cet aéronef vers la zone de poser visée.

Les dispositifs permettant d'automatiser une manoeuvre d'atterrissage peuvent nécessiter de connaître avec une précision métrique la localisation de la zone de poser. Or, une telle localisation est parfois délicate à obtenir. A titre illustratif, une plateforme pétrolière peut parfois être mobile ce qui peut conduire à une incertitude sur sa position relativement importante, par exemple de l'ordre de plusieurs dizaines de mètres voire de centaines de mètres.

La demande de brevet déposée en France le 11 juillet 2016 sous le numéro 1601075 décrit un dispositif d'aide au pilotage d'un giravion pour permettre de guider un giravion lors d'une phase d'approche afin d'atterrir sur une zone de poser pour giravion, telle qu'une hélisurface. Ce dispositif comporte notamment une caméra pour effectuer une pluralité d'images de l'environnement du giravion suivant une ligne de visée et des moyens de traitement pour identifier dans au moins une image au moins une zone de poser recherchée.

Un procédé mis en oeuvre par ce dispositif comporte une étape de présélection pour présélectionner un type de zone de poser, une étape d'acquisition pour effectuer une pluralité d'images de l'environnement du giravion, une étape de traitement pour identifier dans au moins une image au moins une zone de poser recherchée correspondant au type de zone de poser présélectionné lors de l'étape de présélection, au moins une étape d'affichage pour au moins afficher une image représentative de ladite au moins une zone de poser recherchée, au moins une étape de sélection pour au moins sélectionner une zone de poser souhaitée parmi ladite au moins une zone de poser recherchée, et au moins une étape de commande pour au moins générer une consigne de commande permettant de piloter automatiquement ledit giravion en direction de ladite zone de poser souhaitée.

Les documents WO 2014/169354, US 2010/321488 et US 2016/378121 sont aussi connus.

La présente invention a alors pour objet de proposer un procédé et un dispositif alternatifs présentant un niveau de sécurité intéressant.

L'invention vise ainsi un procédé d'aide au pilotage pour faciliter un atterrissage sur une zone de poser avec un aéronef, ce procédé comportant une étape de sélection pour sélectionner la zone de poser sur laquelle l'aéronef doit se poser. Ce procédé comporte les étapes suivantes :

-    activation d'un mode de guidage du système de pilotage automatique pour guider automatiquement l'aéronef vers la zone de poser lors d'une approche,

-    capture d'un flux d'images de la zone de poser avec un système d'acquisition vidéo comprenant au moins une caméra, et transmission dudit flux d'images à un premier système d'imagerie et à un deuxième système d'imagerie, ledit flux d'images comprenant une image réelle de la zone de poser à un instant de calcul courant,

-    calcul avec le premier système d'imagerie d'informations de position de la zone de poser à partir au moins de ladite image réelle, lesdites informations de position définissant une position relative de la zone de poser relativement à l'aéronef, et transmission desdites informations de position au système de pilotage automatique,

-    détermination avec le système de pilotage automatique :

    ◦ d'une position courante de la zone de poser à l'instant de calcul courant en injectant lesdites informations de position dans un estimateur à filtre de Kalman,

◦ d'une position objectif de la zone de poser qui sera atteinte par la zone de poser lorsque l'aéronef se posera sur cette zone de poser avec ledit estimateur,

◦ d'une trajectoire consolidée menant vers la position objectif de la zone de poser en fonction d'au moins un modèle d'approche mémorisé

- transmission d'au moins la position courante et de la trajectoire consolidée au deuxième système d'imagerie,

- vérification avec le deuxième système d'imagerie d'une présence d'une zone de poser à ladite position courante dans l'image réelle,

- génération d'une alarme si ladite présence n'est pas vérifiée,

- affichage sur un premier afficheur de l'image réelle et d'un premier symbole positionné à ladite position courante pour comparaison visuelle par un pilote.

L'expression « image réelle » désigne la partie d'une image du flux d'images capturée à un instant de calcul contenant la zone de poser.

L'expression « zone de poser » désigne une aire d'atterrissage. Une telle aire peut éventuellement être marquée à l'aide d'un cercle formant une ellipse vue de l'aéronef et d'un H.

Les informations de position permettent d'évaluer la position de la zone de poser, à savoir par exemple d'un centre géométrique de cette zone de poser.

Selon ce procédé, une zone de poser est sélectionnée et un système de pilotage automatique dirige l'aéronef vers la zone de poser sélectionnée le long de la trajectoire consolidée. La trajectoire consolidée suivie peut être une trajectoire susceptible d'être corrigeable manuellement par un pilote.

En parallèle, un système d'acquisition vidéo acquiert un flux d'images qui est transmis à un premier système d'imagerie et à un deuxième système d'imagerie usuels.

Un dispositif d'imagerie peut comprendre une carte de traitement effectuant des traitements "simples" et massifs sur le flux d'images (détection des pixels morts, séparation du rouge, du vert et du bleu, changement de code de couleurs, détection de bords sur version en niveaux de gris de l'image, etc...) suivie de deux étages indépendants dédiés à des traitements spécifiques.

Ces deux étages indépendants représentent le premier système d'imagerie et le deuxième système d'imagerie. Par exemple, le premier système d'imagerie et le deuxième système d'imagerie peuvent chacun prendre la forme d'une carte graphique. Le premier système d'imagerie et le deuxième système d'imagerie sont indépendants et communiquent chacun avec la carte de traitement ce qui permet de mettre en place des traitements dissimilaires et d'exploiter cette dissimilitude pour éviter la présence de modes communs de panne non détectée.

La carte de traitement ainsi que le premier système d'imagerie et le deuxième système d'imagerie peuvent éventuellement faire partie d'un même équipement.

Le premier système d'imagerie détermine par une méthode d'analyse d'image la position de la zone de poser cible, relativement à l'aéronef. Par exemple, cette position est exprimée sous la forme d'informations de position comprenant un angle de site et un angle de gisement de la zone de poser par rapport à l'aéronef, ainsi qu'une distance séparant en ligne droite la zone de poser et l'aéronef.

Par exemple, une méthode connue consiste à élaborer ces informations de données en fonction des caractéristiques de forme d'une ellipse et d'un H de la zone de poser vue de l'aéronef.

Par exemple, une méthode d'analyse d'image est du type décrit dans l'article "A Fast Ellipse Detector Using Projective Invariant Pruning" de Jia, Fan et al.

L'avantage d'un dispositif basé sur l'imagerie pour positionner la zone de poser relativement à l'aéronef est de permettre l'obtention d'une position calculée suffisamment précise, sans nécessité de recourir à une instrumentation onéreuse.

Les informations de position sont continuellement transmises au système de pilotage automatique pour être consolidées par un estimateur usuel à filtre de Kalman. Un tel estimateur est connu de l'homme du métier et permet d'estimer la position courante de la zone de poser à partir d'un nuage de points transmis par le premier système d'imagerie. En cas de dysfonctionnement du premier système d'imagerie ou en cas de génération de l'alarme précitée, le filtre de Kalman permet au système de pilotage automatique de prédire cette position courante.

De plus, le système de pilotage automatique détermine une position dite « position objectif » à laquelle se trouvera la zone de poser au moment de l'atterrissage en tant que tel.

Si la zone est immobile, la position objectif peut être alignée avec la position courante. Par contre, si la zone de poser est mobile étant par exemple portée par un bateau en mouvement, le système de pilotage automatique tient compte de l'estimation de sa position courante, de sa vitesse voire d'un profil de mise en stationnaire de l'aéronef, pour prédire où devrait se trouver la zone de poser au moment de son rendez-vous avec l'aéronef.

Dès lors, le système de pilotage automatique met à jour la trajectoire consolidée à suivre pour atterrir sur la zone de poser positionnée au niveau de la position objectif. La trajectoire consolidée est élaborée à l'aide d'un modèle d'approche fournissant les caractéristiques de la trajectoire à suivre. Par exemple, cette trajectoire consolidée doit comporter un segment en palier suivi d'un arrondi de mise en descente parabolique suivie d'une descente le long d'un segment présentant une faible pente, puis un arrondi final parabolique. Le modèle peut aussi imposer un angle de roulis et des accélérations faibles et prédéfinis.

Cette trajectoire consolidée est alors suivie par l'aéronef de manière automatique sous le contrôle du système de pilotage automatique, en appliquant un mode de guidage automatique connu par exemple. Néanmoins, le pilote peut bien sûr contrôler manuellement l'aéronef si besoin.

La position courante et la trajectoire consolidée sont en outre transmises au deuxième système d'imagerie. Par exemple, la trajectoire consolidée est compressée par le système de pilotage automatique puis décompressée par le deuxième système d'imagerie.

Après décompression de la trajectoire consolidée reçue, le deuxième système d'imagerie peut élaborer une série d'images de synthèse permettant de matérialiser une représentation synthétique de la trajectoire consolidée que suivra l'appareil superposée à l'image courante, par exemple sous la forme d'une « balle traçante ».

Ce deuxième système d'imagerie détermine en outre si une zone de poser se trouve à la position courante dans l'image réelle.

Dans la négative, une alarme est émise. Le terme « alarme » faite référence à une alerte écrite, visuelle ou sonore voire tactile informant le pilote d'un possible dysfonctionnement. L'alarme représente un indice de confiance transmis par exemple au système de pilotage automatique.

De plus, le deuxième système d'imagerie superpose au flux vidéo qu'il reçoit un premier symbole représentant la zone de poser pour requérir leur affichage sur un premier afficheur. Ce premier symbole est ainsi incrusté dans le flux vidéo affiché sur le premier afficheur.

Ainsi, un pilote peut détecter visuellement une anomalie si le premier symbole n'est pas affiché sur la zone de poser visée.

Ce procédé permet donc d'avoir divers moyens pour vérifier que l'approche se déroule correctement. Si une alarme est générée ou si le positionnement du premier symbole affiché en superposition de l'image réelle est aberrant, le pilote peut prendre conscience d'une anomalie.

En outre, ce procédé met en oeuvre un premier système d'imagerie qui traque la zone de poser pour obtenir ces informations de position, et un deuxième système d'imagerie qui permet de vérifier les calculs effectués visuellement et par un calcul de corrélation. Le premier système d'imagerie et le deuxième système d'imagerie sont de plus distincts ce qui tend à obtenir un système sans mode commun de dysfonctionnement. Le premier système d'imagerie et le deuxième système d'imagerie peuvent utiliser des algorithmes connus par ailleurs et dissimilaires pour augmenter le niveau de fiabilité du système.

En particulier, le premier système d'imagerie peut utiliser un algorithme pour détecter la zone de poser dans l'image réelle lors de l'étape de calcul d'informations de position, et le deuxième système d'imagerie peut utiliser un autre algorithme pour détecter la zone de poser dans l'image réelle lors de l'étape de vérification de la présence d'une zone de poser dans l'image réelle positionnée à la position courante.

Ce procédé peut alors être relativement robuste, et peut aider un pilote durant une phase de vol usuellement compliquée.

Ce procédé peut comporter une ou plusieurs des caractéristiques qui suivent.

Selon un aspect, la position courante de la zone de poser peut être exprimée au moins avec des données relatives positionnant la zone de poser relativement à l'aéronef, les données relatives étant transmises au deuxième système d'imagerie.

Le premier afficheur peut travailler dans un monde dit « monde relatif » par commodité. Un tel monde relatif utilise des informations de position positionnant la zone de poser voire la trajectoire consolidée au regard de l'aéronef. Les données relatives peuvent comprendre un angle de site ainsi qu'un angle de gisement et une distance.

A l'inverse, un monde dit « monde absolu » utilise des informations de position positionnant la zone de poser voire la trajectoire consolidée dans le référentiel terrestre, par le biais de la latitude et de la longitude par exemple.

Selon un aspect, si la position courante de la zone de poser varie entre deux instants de calcul successifs, la position objectif peut être estimée en déterminant un vecteur vitesse de déplacement de la zone de poser à l'aide des positions courantes déterminées lors desdits instants de calcul successifs.

Par exemple, le vecteur vitesse de déplacement est estimé par une estimation de vitesse nord et de vitesse est de la zone de poser traquée.

Le filtre de Kalman peut permettre ainsi de déterminer la position objectif, éventuellement en considérant que la zone de poser se déplace à une vitesse constante à savoir selon une accélération nulle.

Selon un autre aspect, la vérification avec le deuxième système d'imagerie d'une présence d'une zone de poser à la position courante peut être réalisée de manières diverses.

Selon une première réalisation, le procédé comporte une étape d'analyse avec le deuxième système d'imagerie d'une portion de l'image réelle incluant la position courante pour déterminer si une zone de poser est présente dans cette portion, ladite alarme étant générée si aucune zone de poser n'est détectée dans ladite portion de l'image réelle.

L'expression « portion de l'image réelle incluant la position courante » désigne une partie de l'image réelle qui inclut un point positionné à la position courante. Par exemple, ladite portion présente des dimensions prédéterminées et est centrée sur la position courante.

Dès lors, le deuxième système d'imagerie détermine s'il identifie une zone de poser au niveau de la position courante. A cet effet, le deuxième système d'imagerie peut utiliser des algorithmes qui diffèrent des algorithmes utilisés par le premier système d'imagerie lors que la traque de la zone de poser. Par exemple, le deuxième système d'imagerie évalue si ladite portion inclut une forme caractéristique d'une zone de poser, par exemple un H cerclé quand la visibilité est suffisante ou un chapelet de lumières vertes la nuit ou par temps de brouillard.

Dans la négative, le deuxième système d'imagerie émet un signal pour la génération d'une alarme.

Le premier mode de réalisation propose de vérifier avec le deuxième système d'imagerie que l'image réelle présente bien une zone de poser à la position courante évaluée à l'aide des informations de position provenant du premier système d'imagerie.

Selon une deuxième réalisation, le procédé comporte les étapes de :

- calcul avec le deuxième système d'imagerie d'une image de synthèse actuelle représentant la zone de poser vue de l'aéronef à l'instant de calcul courant à partir de ladite position courante,

- comparaison avec le deuxième système d'imagerie de ladite image de synthèse actuelle et de l'image réelle.

Ladite alarme est générée lorsque ladite image de synthèse actuelle ne correspond pas à la zone de poser présente sur l'image réelle.

Selon un aspect, l'image de synthèse actuelle peut ne pas correspondre à la zone de poser présente sur l'image réelle si une distance séparant l'image de synthèse et l'image réelle est supérieure à un seuil de précision prédéterminée.

La coïncidence entre zone de poser prédite et zone de poser détectée par le deuxième système d'imagerie peut être confirmée par deux images distinctes qui sont ainsi considérées comme étant similaires si les images sont séparées par une distance inférieure à un seuil.

Ce deuxième mode de réalisation propose d'élaborer une image de synthèse dite « actuelle » de la zone de poser avec le deuxième système d'imagerie, et de comparer cette image de synthèse actuelle à l'image réelle pour vérifier que l'image de synthèse actuelle et l'image réelle sont appariées.

Plusieurs techniques différentes peuvent être utilisées pour évaluer la qualité d'un appariement. Des distances peuvent être évaluées dans un système colorimétrique R, V, B (rouge, vert, bleu) par exemple entre les points des différentes images, une fonction statistique sur ces distances étant par exemple comparée à un seuil pour génération d'une alarme.

Selon un aspect, le procédé peut comporter les étapes suivantes :

- comparaison de ladite distance à un seuil d'abandon prédéterminé.

- abandon de ladite approche si ladite distance dépasse ledit seuil d'abandon.

La non corrélation des images réelle et de synthèse peut induire de désengager le système de pilotage automatique. Le seuil d'abandon peut différer du seuil de génération d'une alarme.

Par exemple, le système de pilotage automatique peut dans un premier temps utiliser une signalisation très visible pour signaler un dysfonctionnement, tel qu'un flash lumineux émis pendant 30 secondes par exemple. Dans un deuxième temps, le système de pilotage automatique peut se désengager, ou éventuellement peut basculer sur un autre mode de pilotage tel qu'un mode de pilotage en vitesse sol ou en de mise en vol stationnaire automatique.

Selon un aspect, le deuxième système d'imagerie peut élaborer une représentation synthétique de la trajectoire consolidée, le premier afficheur affichant la représentation synthétique.

La trajectoire consolidée peut par prendre la forme d'une balle traçante dans le flux vidéo affiché sur le premier afficheur. La trajectoire consolidée est alors représentée par une succession de plots, chaque plot représentant par exemple un point à atteindre avec l'aéronef à chaque seconde consécutive.

Selon un aspect, le procédé peut comporter les étapes suivantes :

- transmission par le système de pilotage automatique à un deuxième afficheur de la trajectoire consolidée menant vers la zone de poser dans le référentiel terrestre, et de la position courante exprimée sous le forme de coordonnées absolues dans le référentiel terrestre,

- affichage sur ledit deuxième afficheur de ladite trajectoire consolidée et d'un deuxième symbole représentant la zone de poser positionnée à ladite position courante de la zone de poser.

Les coordonnées absolues peuvent prendre la forme de latitude et de longitude.

Dès lors, le deuxième système d'imagerie sollicite le premier afficheur par exemple pour présenter dans le monde relatif la zone de poser et la trajectoire consolidée.

Le système de pilotage automatique peut solliciter le deuxième afficheur pour présenter dans le monde absolu la zone de poser et la trajectoire consolidée.

La zone de poser et la trajectoire consolidée sont ainsi affichées dans deux mondes différents pour maximiser la surveillance du fonctionnement du système.

Le premier afficheur et le deuxième afficheur peuvent comprendre respectivement deux écrans dédiés, ou peuvent représenter deux portions d'un même écran. Au moins le deuxième afficheur peut faire partie d'un calculateur de navigation usuel.

Le procédé peut comporter une étape d'affichage par le deuxième afficheur d'au moins une des données suivantes : au moins un point de passage prédéterminé de ladite trajectoire consolidée, un plot identifiant un objet muni d'un système d'identification AIS, au moins un point représentant un objet détecté par un système radar.

L'acronyme AIS désigne un système d'identification automatique connu sous l'expression anglaise « Automatic Identification System ». Ce système est un système d'échanges automatisés de messages entre véhicules qui permet de connaître l'identité, le statut, la position et la route des véhicules se situant à proximité.

Le deuxième afficheur permet ainsi de visualiser la zone de poser et la trajectoire consolidée affichées au regard d'autres objets positionnés par des techniques totalement différentes. Si les données affichées ne correspondent pas à la scène visible par un pilote, ce pilote peut en déduire un dysfonctionnement. Le mode de guidage automatique peut alors être interrompu pour laisser place à un pilotage manuel.

Selon un aspect, l'étape d'activation du mode de guidage peut comporte les étapes suivantes :

- sélection d'une zone de poser par un pilote sur proposition du premier système d'imagerie,

- activation du mode de guidage.

Selon cette variante, un pilote peut manoeuvrer le premier système d'imagerie pour sélectionner sur le premier afficheur la zone de poser à rejoindre. Le mode de guidage est alors activé pour rejoindre cette zone de poser, le procédé permettant d'affiner la trajectoire consolidée lors du déplacement de l'aéronef. Le mode de guidage peut être activé par action spécifique d'un pilote sur un moyen de commande.

Selon une autre variante, l'étape d'activation du mode de guidage peut comporter les étapes suivantes :

- désignation d'un secteur d'atterrissage,

- activation du mode de guidage pour se diriger vers ledit secteur d'atterrissage,

- recherche d'une zone de poser,

- après détection de la zone de poser, confirmation de la zone de poser par un pilote,

- activation du mode de guidage pour se diriger vers la zone de poser.

Le mode de guidage est ainsi activé pour rejoindre un secteur d'atterrissage, puis pour rejoindre la zone de poser lorsque cette zone de poser est identifiée.

Le guidage peut ainsi être enclenché lorsque l'aéronef ne distingue pas la zone de poser, mais une simple silhouette par exemple d'une plateforme. Par contre, le pilote doit intervenir ultérieurement pour confirmer la zone de poser.

Outre un procédé, l'invention vise un système d'aide au pilotage destiné à la mise en oeuvre de ce procédé, le système d'aide au pilotage comprenant au moins le premier système d'imagerie, le deuxième système d'imagerie, ladite au moins une caméra, le système de pilotage automatique, et le premier afficheur précité.

Ce système d'aide au pilotage peut comprendre au moins un des organes suivants : un deuxième afficheur, une base de données incluant au moins une zone de poser, un sélecteur pour sélectionner une zone de poser.

L'invention vise de plus un aéronef muni de ce système d'aide au pilotage.

L'invention et ses avantages apparaîtront avec plus de détails dans le cadre de la description qui suit avec des exemples donnés à titre illustratif en référence aux figures annexées qui représentent :

- la figure 1, un schéma illustrant un système d'aide au pilotage selon l'invention, et

- la figure 2, un schéma illustrant un premier afficheur et un deuxième afficheur,

- la figure 3, un schéma illustrant la comparaison d'une image à une autre image, et

- la figure 4, un schéma illustrant une zone de poser mobile.

Les éléments présents dans plusieurs figures distinctes sont affectés d'une seule et même référence.

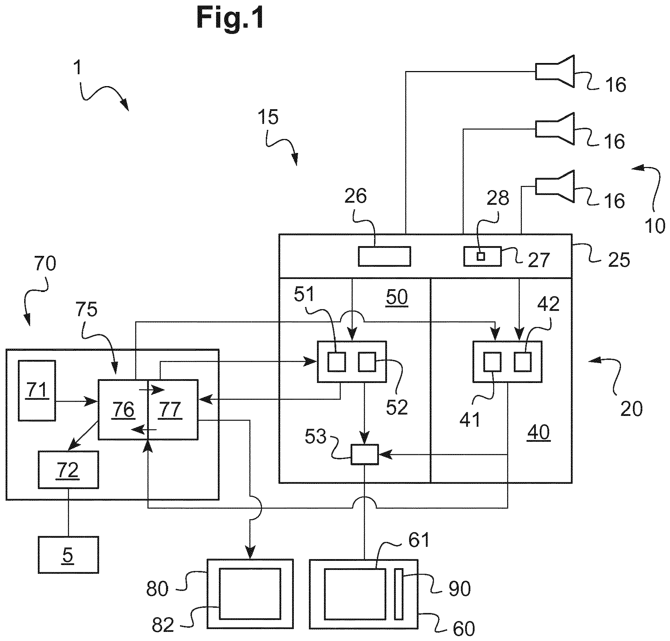

La figure 1 présente un aéronef 1. L'aéronef 1 est pourvu d'organes de manoeuvre 5 mobiles pour diriger l'aéronef 1 dans l'espace. Sur un hélicoptère, des organes de manoeuvre comprennent des pales de rotor, notamment d'un rotor participant au moins partiellement à la sustentation voire à la propulsion de l'aéronef 1. Des organes de manoeuvre 5 peuvent aussi comprendre des volets, par exemple agencés sur ou constitutifs d'une dérive et/ou d'un empennage et/ou d'une aile.

De plus, l'aéronef 1 est muni d'un système d'aide au pilotage 10 selon l'invention. Ce système d'aide au pilotage 10 comprend une unité de traitement 75 ainsi que des senseurs usuels 71 et des actionneurs 72 aptes à déplacer les organes de manoeuvre 5. L'unité de traitement 75 commande les actionneurs 72 en fonction des mesures effectuées par les senseurs 71 pour tendre à respecter une consigne de pilotage en appliquant des procédés usuels.

De tels senseurs 71 peuvent évaluer la valeur courante d'au moins un état de vol, tel qu'au moins une vitesse angulaire de l'aéronef par rapport à un axe d'un référentiel de l'aéronef, un angle de roulis et un angle de tangage de l'aéronef 1, un cap suivi par l'aéronef 1, au moins une accélération de l'aéronef 1 selon un axe du référentiel 2 de l'aéronef, au moins une vitesse de l'aéronef selon un axe du référentiel 2 de l'aéronef, une position géographique de l'aéronef dans le référentiel terrestre... Les senseurs 71 peuvent par exemple comprendre une centrale inertielle, un système de positionnement par satellites, un système radar, un système anémobarométrique, une radiosonde....

Les actionneurs 72 peuvent par exemple comprendre des vérins, de servocommandes, des moteurs...

Dès lors, l'unité de traitement 75 est reliée par des liaisons filaires ou non filaires aux senseurs 71 et aux actionneurs 72. Cette unité de traitement peut être une unité duale duplex munie de deux sous-ensembles de traitement 76, 77. Chaque sous-ensemble de traitement 76, 77 peut comprendre au moins un processeur, une unité de mémoire, un circuit intégré, un système programmable, un circuit logique, ces exemples ne limitant pas la portée donnée à l'expression « sous-ensemble de traitement ».

Par ailleurs, le système d'aide au pilotage 10 comporte un système d'acquisition vidéo 15 et un dispositif d'imagerie 20.

Le système d'acquisition vidéo 15 est muni d'au moins une caméra 16. Par exemple, le système d'acquisition vidéo 15 comporte une première caméra munie d'une longue focale ainsi que d'un champ étroit de 5 degrés par 3.5 et d'une résolution de 14 millions de pixels, une deuxième caméra munie d'un champ de 30 degrés par 20, une troisième caméra munie d'un grand angle ayant un champ de 110 degrés environ.

Le dispositif d'imagerie peut prendre la forme d'un calculateur d'imagerie. Ce calculateur d'imagerie peut comprendre une carte de traitement 25 reliée aux caméras et pouvant représenter une unité de calcul du système d'acquisition vidéo. La carte de traitement 25 peut être une carte électronique.

De plus, le dispositif d'imagerie comporte un premier système d'imagerie 40 et un deuxième système d'imagerie 50 reliés chacun à la carte de traitement.

Dès lors, les caméras 16 émettent des flux vidéo transmis à la carte de traitement 25. Cette carte de traitement 25 effectue un traitement usuel, par exemple colorimétrique, pour générer un flux d'images transmis au premier système d'imagerie 40 et au deuxième système d'imagerie 50. Dès lors, le système d'acquisition vidéo 15 capture d'un flux d'images transmis au premier système d'imagerie 40 et au deuxième système d'imagerie 50, éventuellement directement ou via la carte de traitement 25.

Le premier système d'imagerie 40 et le deuxième système d'imagerie 50 peuvent chacun prendre par exemple la forme d'une carte graphique du calculateur d'imagerie. Dès lors, le premier système d'imagerie 40 et le deuxième système d'imagerie 50 représentent deux voies indépendantes de calcul du calculateur d'imagerie.

Le premier système d'imagerie 40 et le deuxième système d'imagerie 50 voire la carte de traitement 25 peuvent comprendre au moins un processeur 41, 51, 26 et au moins une unité de mémoire 42, 52, 27, un circuit intégré, un système programmable, un circuit logique, ces exemples ne limitant pas la portée donnée à l'expression « système d'imagerie » et à l'expression « carte de traitement ».

Par ailleurs, le premier système d'imagerie 40 est relié par une liaison filaire ou non filaire au deuxième système d'imagerie 50, et par exemple à un système d'incrustation vidéo 53 permettant d'incruster une image synthétique dans un flux vidéo. Le système d'incrustation vidéo 53 peut comprendre au moins un processeur, une unité de mémoire, un circuit intégré, un système programmable, un circuit logique, ces exemples ne limitant pas la portée donnée à l'expression « système d'incrustation vidéo 53 ».

De plus, le premier système d'imagerie 40 est relié par au moins une liaison filaire ou non filaire au système de pilotage automatique 70 de l'aéronef, et notamment à l'unité de traitement 75.

Le deuxième système d'imagerie 50 est relié par une liaison filaire ou non filaire à un premier afficheur 60, le cas échéant via le système d'incrustation vidéo 53. Ce premier afficheur 60 comprend un premier écran 61 et un sélecteur 90 manoeuvrable par un pilote pour requérir des actions diverses. Par exemple, le premier écran est un écran tactile incluant ce sélecteur.

Le deuxième système d'imagerie 50 est aussi relié au système de pilotage automatique 70 par au moins une liaison filaire ou non filaire, et notamment à l'unité de traitement 75.

Par ailleurs, le système d'aide au pilotage 10 peut comporter un deuxième afficheur 80 relié par au moins une liaison filaire ou non filaire au système de pilotage automatique 70, et notamment à l'unité de traitement 75. Ce deuxième afficheur 80 peut prendre la forme d'un afficheur dédié ou encore par exemple d'un calculateur de navigation usuel adapté pour appliquer le procédé selon l'invention. Le deuxième afficheur 80 comporte au moins un deuxième écran 82. Eventuellement, le premier afficheur et le deuxième afficheur sont deux parties d'un même équipement, le premier écran et le deuxième écran formant deux écrans superposés.

Selon un autre aspect, le dispositif d'imagerie peut comporter une base de données 28 mémorisant diverses zones de poser, par exemple de plateformes. La base de données est éventuellement mémorisée dans une unité de mémoire 27 de la carte de traitement 25.

Un tel système d'aide au pilotage 10 permet d'appliquer le procédé selon l'invention.

Selon ce procédé, un pilote sélectionne une zone de poser sur laquelle ce pilote souhaite atterrir durant une étape de sélection. Dès lors, ce pilote active un mode de guidage automatique pour rejoindre automatiquement la zone de poser en suivant une trajectoire consolidée ayant des caractéristiques prédéfinies.

Le terme « pilote » est à interpréter au sens large, et désigne ainsi le pilote en tant que tel mais aussi le cas échéant un membre d'équipage embarqué dans l'aéronef.

Selon une première variante, le dispositif d'imagerie propose au pilote une sélection des zones de poser en appliquant des techniques connues. Par exemple, les zones de poser sont présentées sur le premier afficheur, le pilote utilisant le sélecteur 90 pour choisir une zone de poser.

Lorsqu'une zone de poser est sélectionnée, le pilote peut activer le mode de guidage automatique.

Pour choisir une zone de poser, les zones de poser disponibles peuvent être extraites de la base de données 28.

Selon une méthode alternative, le premier système d'imagerie 40 peut traiter le flux d'images généré par les caméras pour identifier des zones de poser lointaines et les afficher sur un écran, par exemple l'écran du premier afficheur.

L'enseignement des documents EP 2 996 009, WO2014169354, ou de la demande de brevet déposée en France auprès de l'INPI le 11 juillet 2016 sous le numéro 1601076 peut être appliqué.

Dans un premier temps, le premier système d'imagerie peut traiter des images du flux d'images en procédant à une détection d'une ligne d'horizon à l'aide d'une méthode dite « par gradient ». Plus précisément, une telle méthode consiste à utiliser un « filtre de Sobel » vertical sur une image. Une telle méthode permet ainsi d'amplifier les contrastes et de détecter les lignes horizontales. Ensuite, le premier système d'imagerie cherche au sein de l'image la droite qui passe par le plus de points à l'aide d'une « transformée de Hough ». En pratique, la ligne d'horizon n'est pas tout à fait une droite mais un arc de parabole sur l'image.

Une détection approximative de la ligne d'horizon n'est cependant pas gênante puisque la détection de l'horizon ne sert qu'à éliminer la partie haute de l'image correspondant au ciel et n'est pas utile pour détecter les zones de poser.

D'autres méthodes de segmentation de l'image sont envisageables pour éliminer la mer et le ciel, et ne garder que les zones qui semblent comporter un objet de type plateforme, bateau, etc...

Par ailleurs, la prise en compte par le premier système d'imagerie de l'inclinaison du giravion suivant un axe de roulis est obtenue grâce aux senseurs 71 permettant de connaître l'assiette du giravion à tout moment et, par conséquent, de retrouver l'angle de rotation permettant de remettre l'image droite correspondant à une assiette horizontale du giravion.

Une fois la ligne d'horizon identifiée et le ciel éliminé, le premier système d'imagerie met en oeuvre une méthode dite « par région » telle que décrite pour une autre application dans une publication d'Arnaud Le Troter, Sébastien Mavromatis et Jean Sequeira et désignée par « Soccer field détection in video images using color and spatial coherence - International Conférence on Image Analysis and Récognition Porto, Portugal, Octobre 2004 ».

Une telle méthode par région permet alors de rechercher les couleurs dominantes d'une image ou d'une zone d'intérêt par distribution colorimétrique. Cette méthode permet également la recherche des zones cohérentes selon un critère colorimétrique de l'image puis elle utilise un modèle d'élargissement sur les pixels de l'image. Un tel modèle est connu pour établir une reconnaissance des pixels colorés constituants des images et peut utiliser un espace de représentation des couleurs tel que celui désigné en langue française par l'acronyme « TSL » pour « Teinte, Saturation, Luminosité » et en langue anglaise par l'acronyme « HLS » pour « Hue, Saturation Lightness ».

Une telle méthode par région peut notamment permettre de détecter la mer dans une partie basse de l'image agencée en dessous de la ligne d'horizon et le ciel dans la partie haute de l'image agencée au dessus de la ligne d'horizon.

Par la suite, le regroupement des pixels restants en zones connexes permet d'obtenir les zones comprenant une ou plusieurs zones de poser recherchées. Les zones connexes présentes uniquement dans le ciel sont retirées et correspondent généralement à des nuages, des fumées et des objets volants qui ne correspondent pas à des zones de poser à rechercher.

La formation des zones cohérentes consiste à assigner à chaque pixel une zone dite « zone TSL » ou une absence de zone TSL si la couleur du pixel n'est dans aucune des zones dominantes TSL (ou couleurs dominantes de l'image). Ensuite, le premier système d'imagerie permet de créer des zones connexes de pixels appartenant à une même zone TSL.

Le phénomène d'élargissement d'un pixel à une zone est réalisé en appliquant un outil de morphologie mathématique correspondant à une fermeture. L'élément structurant choisi pour la fermeture est un cercle de taille très inférieure aux tailles minimales des zones de poser ou ensembles de zones de poser à détecter dans l'image. La taille choisie de l'élément structurant est de l'ordre du dixième de celle des objets à détecter.

Les zones obtenues sont alors identifiées comme susceptibles de contenir des zones de poser potentielles et peuvent être affichées indépendamment par les moyens d'affichage puis sélectionnées par l'équipage.

Avantageusement, le premier afficheur peut permettre d'afficher différentes images représentatives respectivement d'une pluralité de types de zones de poser à rechercher par le dispositif et les moyens de présélection peuvent être de type tactiles et agencés directement sur une surface d'affichage de l'organe d'affichage.

Ainsi, l'organe d'affichage permettant d'afficher une image représentative de la (ou les) zone(s) de poser recherchée(s) et les moyens de sélection de la zone de poser souhaitée parmi la (ou les) zone(s) de poser recherchée(s) peuvent être confondus et être formés par un écran tactile de sélection.

Au surplus, l'écran tactile de présélection et l'écran tactile de sélection peuvent également être confondus et être formés par un unique écran tactile du premier afficheur permettant dans un premier temps de présélectionner un type de zone de poser à rechercher, dans un deuxième temps d'afficher au moins une zone de poser identifiée correspondant au type de zone de poser présélectionné et enfin dans un troisième temps de sélectionner une zone de poser souhaitée.

Selon une deuxième variante, un pilote peut désigner un secteur d'atterrissage et activer le mode de guidage pour se diriger vers ledit secteur d'atterrissage. Ce secteur d'atterrissage peut comprendre une silhouette d'une plateforme ou d'un bateau observé avec les caméras, cette silhouette n'étant éventuellement pas suffisamment précise pour permettre de détecter les zones de poser en tant que telles.

Durant le déplacement de l'aéronef, le dispositif d'imagerie et notamment le premier système d'imagerie peut scruter le secteur d'atterrissage, par exemple selon la méthode précédemment décrite, pour rechercher une zone de poser. Après détection de la zone de poser, un pilote peut confirmer la zone de poser choisie puis active le mode de guidage pour se diriger vers la zone de poser.

Par ailleurs, lors du déplacement de l'aéronef, le système d'acquisition vidéo 15 capture un flux d'images de la zone de poser. Ce flux d'images est transmis le cas échéant par la carte de traitement 25 au premier système d'imagerie 40 et au deuxième système d'imagerie 50. Ce flux d'images comprend une image dite « image réelle » incluant la zone de poser traquée à chaque instant de calcul.

Dès lors, le premier système d'imagerie 40 évalue des informations de position de la zone de poser à partir de l'image réelle, voire d'au moins un des états de vol précités. Les informations de position permettent de déterminer la position relative de la zone de poser relativement à l'aéronef 1.

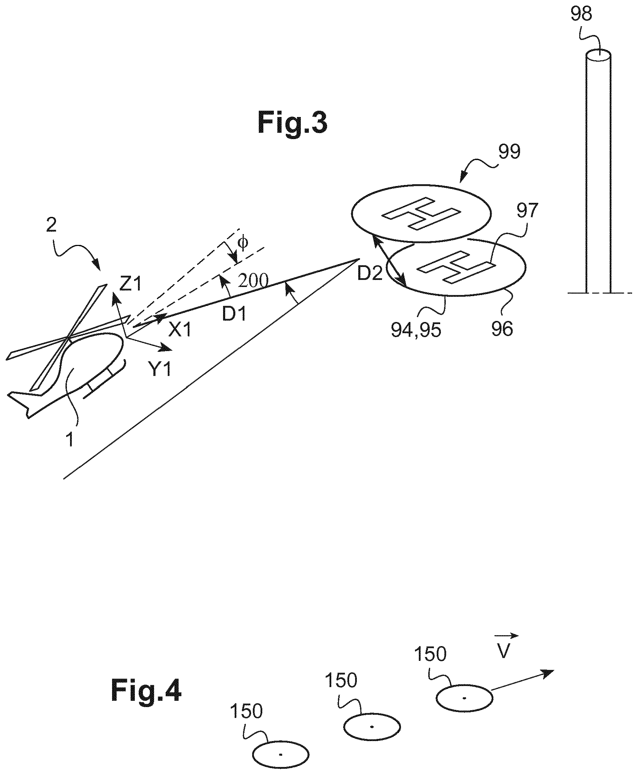

En référence à la figure 3, l'aéronef 1 est associé à un référentiel 2. Les informations de position peuvent alors comprendre un angle de site 200 et un angle de gisement Φ d'un centre géométrique de la zone de poser, et une distance D1 séparant l'aéronef 1 de la zone de poser.

A titre illustratif et dans le cas d'une zone de poser représentée au sol par un cercle, l'épaisseur du trait formant la circonférence de ce cercle peut être normée et valoir 1 mètre selon la législation « CAP 437 - Standards for Offshore Helicopter Landing Areas ». Pour les autres zones de poser, il est possible de définir d'autres catégories de zones de poser en fonction de l'épaisseur du cercle, du carré, du triangle matérialisant une zone de poser au sol ou sur un support. Suivant le type de zone de poser présélectionné un algorithme différent peut être utilisé par les moyens de calcul.

En outre, dans le cas d'une zone de poser matérialisée par un cercle prédéterminé, en utilisant l'angle de gisement Φ sous lequel la (ou les) caméra(s) voi(en)t le diamètre du cercle, la distance D1 au centre de la zone de poser peut être calculée. La forme de la zone de poser vue par chaque caméra est une ellipse correspondant à la forme déformée du cercle vue par la (ou les) caméra(s) et identifiée dans les images dont les équations peuvent être calculées.

En faisant l'approximation des petits angles, on obtient:

$$D1 = \frac{e}{\Phi}$$

avec e le diamètre du contour de la zone de poser de l'ordre de 10 mètres. La valeur $\Phi$ représente l'angle sous lequel est vu le diamètre de la zone de poser, et est quant à elle calculable à partir de la géométrie projective en utilisant notamment une approximation du modèle de caméra sténopé. Le modèle sténopé consiste à supposer que tous les rayons de lumière passent par un point unique (appelé sténopé) et sont projetés sur le plan sur lequel est capturée l'image. La distance entre le point et le plan est appelée distance focale f.

Conformément au modèle sténopé, le point de concours des rayons est défini comme origine du repère orthonormé de l'espace trois dimensions avec un axe z qui l'axe orthogonal au plan de l'image dans la direction opposée à l'image.

Le point de coordonnées (x,y,z) est projeté sur le plan image ($x'$,$y'$,$z'$) avec :

$$x' = x * \frac{f}{z}, \quad y' = y * \frac{f}{z} \text{ et } z' = f.$$

L'angle sous lequel on voit un objet correspond alors à la taille de l'objet sur le plan image divisée par la distance focale. Cette approximation est valable pour les angles de petites tailles. En pratique, la taille de l'image est définie par un nombre de pixels : il faut donc la multiplier par un coefficient de proportionnalité convertissant angle et pixel. Le dispositif reproduit alors une scène, dont on connaît les caractéristiques. Ainsi grâce à la caméra, cette scène est capturée, les images obtenues permettant de calculer les coefficients de proportionnalité.

Ensuite, les données du giravion telles que son assiette ainsi que la position de la caméra permettent d'identifier l'angle de site 200 sous lequel est vue la zone de poser, cet angle de site 200 étant la différence entre l'assiette de l'aéronef lui-même et l'angle de site de la caméra par rapport à l'aéronef.

Les moyens de calculs commencent par réaliser une rotation d'angle inverse à l'angle de roulis du giravion sur l'image prise par la caméra pour la remettre droite.

Par suite, l'angle 200 est calculé en effectuant dans un premier temps la différence entre l'angle de tangage du giravion fourni par les instruments de bord et l'angle séparant un axe de visée de la caméra et un axe longitudinal du giravion (valeur constante si la caméra est fixée à l'appareil sinon, lorsqu'elle est variable, elle peut être transmise aux moyens de calcul par le système de caméra). L'angle 200 est alors calculé en ajoutant cette somme à un angle mesuré sur l'image. Cet angle mesuré à partir de l'image correspond à l'angle séparant l'axe de visée de la caméra de celui passant par la caméra et le centre de la zone de poser. Cet angle mesuré sur l'image est donc obtenu à partir des données fournies par la caméra permettant de définir un angle à partir de pixels et de la distance en pixels entre le centre de la zone de poser et l'axe de visée de la caméra.

Par ailleurs, les zones de poser répondant à la norme CAP437 ont une forme circulaire avec un H au centre. Lorsque les giravions sont éloignés de l'axe vertical passant par le centre de ces zones de poser, les zones de poser sont alors vues sous la forme d'ellipses qui peuvent être caractérisée par une équation réduite dans un repère orthonormé sous la forme :

$$\frac{((x \cos\theta1 + y \sin\theta1) - x_E)^2}{a^2} + \frac{((-x \sin\theta1 + y \cos\theta1) - y_E)^2}{b^2} = 1$$

avec $E(x_E,y_E)$ le centre de l'ellipse, $\theta1$ l'orientation de l'ellipse, a le demi axe focal et b le demi axe non focal. Ainsi, pour caractériser une ellipse quelle qu'elle soit, les moyens de calcul permettent de déterminer ces cinq paramètres.

Le document US 4618989 donne un exemple de réalisation d'un extracteur de paramètres d'ellipse dans une image.

Dans ce contexte, le premier système d'imagerie émet continuellement les informations de position déterminées au système de pilotage automatique 70.

De plus, le premier système d'imagerie 40 peut émettre le flux vidéo reçu vers le deuxième système d'imagerie 50, et notamment vers le système d'incrustation vidéo 53.

Le premier système d'imagerie 40 a donc pour objet de traquer la zone de poser pour déterminer sa position par rapport à l'aéronef.

Cette position est ensuite exploitée par le système de pilotage automatique 70.

Dès lors, l'unité de traitement 75 détermine une position dite « position courante » de la zone de poser ciblée en injectant les informations de position dans un estimateur à filtre de Kalman.

Cette position courante peut être exprimée sous la forme d'une position relative exprimée relativement à l'aéronef, par exemple via un angle de site ainsi qu'un angle de gisement et une distance. De manière complémentaire ou alternative, cette position courante peut être exprimée sous la forme d'une position absolue, par exemple sous la forme d'une latitude et d'une longitude d'un point caractéristique de la zone tel que son centre géométrique éventuellement.

De plus, l'unité de traitement 75 détermine une position dite « position objectif » de la zone de poser qui sera atteinte par la zone de poser lorsque l'aéronef 1 se posera sur cette zone de poser. La position objectif est ainsi une position prédite dans laquelle se trouvera la zone de poser lors de l'atterrissage.

En référence à la figure 4, si la position courante de la zone de poser varie entre deux points 150 successifs de calcul, la position objectif peut être évaluée en évaluant un vecteur vitesse de déplacement de la zone de poser, à l'aide des positions courantes déterminées lors desdits points successifs de calcul.

En outre et en référence à la figure 1, l'unité de traitement 75 détermine une trajectoire dite « trajectoire consolidée » menant vers la position courante de la zone de poser, et le cas échant vers la position objectif, en appliquant au moins un modèle d'approche mémorisé.

Dès lors, l'unité de traitement 75 transmet continûment notamment la position courante et la trajectoire consolidée au deuxième système d'imagerie 50 pour signaler à l'équipage un éventuel dysfonctionnement. Eventuellement, l'unité de traitement transmet, de plus, au premier système d'imagerie les valeurs des états de vol nécessaires à son fonctionnement.

Dès lors, le deuxième système d'imagerie 50 détermine si l'image réelle présente la zone de poser adéquate à la position courante.

Selon un premier mode de réalisation, le deuxième système d'imagerie 50 scrute, par des méthodes de traitement d'images éventuellement usuelles et/ou différentes des méthodes utilisées par le premier système d'imagerie, une portion de l'image réelle positionnée autour de la position courante. En particulier, le deuxième système d'imagerie 50 traite cette portion de l'image réelle pour déterminer si une zone de poser est présente dans cette portion.

Dans la négative, une alarme est générée.

Le deuxième système d'imagerie 50 évalue donc la présence d'une zone de poser à l'emplacement prédit par le système de pilotage automatique.

Selon un deuxième mode de réalisation, le deuxième système d'imagerie 50 calcule une image dite « image de synthèse actuelle » représentant la zone de poser vue de l'aéronef 1 à l'instant de calcul courant. Pour élaborer cette image de synthèse, le deuxième système d'imagerie 50 prend en considération la forme mémorisée de la zone de poser et la déforme en fonction de la position courante. Par exemple et dans le cadre d'une zone de poser comprenant un cercle, le deuxième système d'imagerie 50 détermine l'ellipse vue de l'aéronef selon des méthodes mathématiques usuelles.

Au fil du temps, le deuxième système d'imagerie 50 détermine donc une succession d'images de synthèse actuelles.

De plus, le deuxième système d'imagerie 50 compare à chaque instant de calcul l'image de synthèse actuelle et l'image réelle reçue par ailleurs.

A cet effet et en référence à la figure 3, le deuxième système d'imagerie 50 peut déterminer la valeur d'une distance D2 séparant l'image de synthèse 99 et l'image réelle 94. Si cette distance D2 est inférieure à un seuil de précision défini par le constructeur, le deuxième système d'imagerie 50 considère que l'image de synthèse 99 et l'image réelle 94 correspondent l'une avec l'autre.

Dans la négative, le deuxième système d'imagerie 50 génère une alarme.

Eventuellement et selon le deuxième mode de réalisation, le deuxième système d'imagerie 50 peut aussi comparer la distance D2 à un seuil d'abandon qui est défini par le constructeur, ce seuil d'abandon étant supérieur au seuil de précision.

Si cette distance D2 dépasse le seuil d'abandon, le système d'aide au pilotage peut mettre fin au mode de guidage qui guide de manière automatique l'aéronef le long de la trajectoire consolidée.

Le deuxième système d'imagerie 50 évalue donc l'appariement de cette succession d'images synthétiques avec les images réelles reçues des caméras. Le deuxième système d'imagerie 50 vérifie, grâce à des algorithmes éventuellement différents de ceux utilisés par le premier système d'imagerie pour identifier selon quelle position relative et quel angle se trouve le marquage particulier recherché, que l'appariement est très bon au niveau de la zone de poser en cours d'acquisition par le système de pilotage automatique.

De plus, le deuxième système d'imagerie 50 peut vérifier que l'appariement est très faible partout ailleurs.

En effet, l'environnement d'une zone de poser peut comporter des structures présentant des formes susceptibles d'être assimilées à une zone de poser. Par exemple, une cheminée peut présenter une telle forme en ayant une extrémité en forme d'ellipse, à l'instar d'une zone de poser vue de loin.

Le deuxième système d'imagerie 50 peut vérifier que l'appariement d'une telle structure et de la zone de poser est faible.

Indépendamment du mode de réalisation, l'alarme éventuellement émise peut prendre la forme d'un indice de confiance faible transmis à l'unité de traitement 75. Cette unité de traitement 75 sollicite un système d'alerte pour signaler un dysfonctionnement à un pilote, par le biais d'une alerte écrite, visuelle et/ou sonore et/ou tactile par exemple.

Selon un autre aspect, le deuxième système d'imagerie 50 superpose au flux d'images réelles un premier symbole positionné à ladite position courante de la zone de poser générée par ce deuxième système d'imagerie 50. Le deuxième système d'imagerie 50 transmet alors au premier afficheur 60 un flux d'images provenant des caméras dans lequel est incrusté au fil du temps le premier symbole.

Dans le cadre du deuxième mode de réalisation le premier symbole peut prendre la forme de l'image de synthèse actuelle ou une autre forme

Quel que soit le mode de réalisation, le premier symbole peut comprendre une pluralité de segments convergents. Quatre segments peuvent former une croix par exemple.

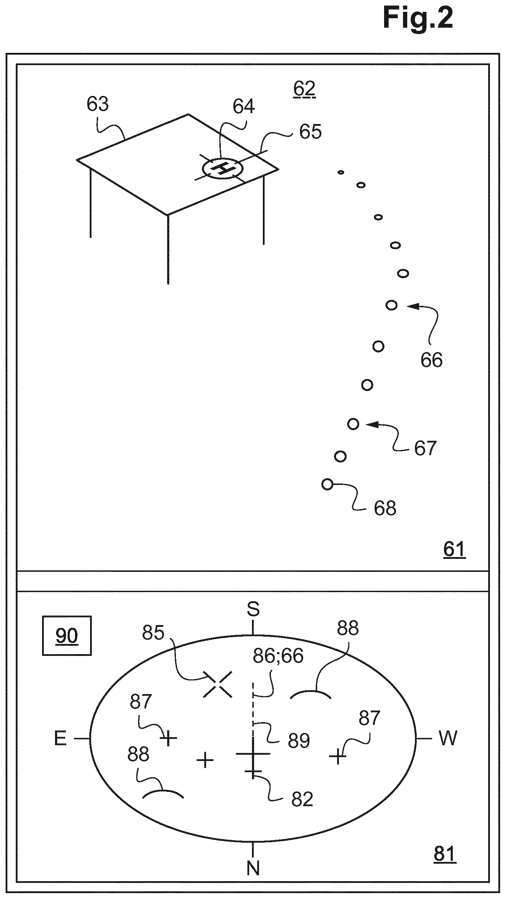

Dès lors et en référence à la figure 2, le premier afficheur 60 affiche l'image réelle 94 et un premier symbole 65 positionné à la position courante pour comparaison visuelle par un pilote. Le premier symbole peut être généré en utilisant une position courante exprimée sous la forme des données relatives.

Un premier symbole en forme de croix présente l'avantage d'éventuellement permettre à un pilote de visualiser la zone de poser 64.

Selon un autre aspect, le deuxième système d'imagerie 50 peut élaborer une représentation synthétique 67 de la trajectoire consolidée 66.

En effet, la trajectoire consolidée élaborée par le système de pilotage automatique peut comporter une succession de formes mathématiques simples, tels que des segments de droite, des portions de parabole... Dès lors, le système de pilotage automatique peut compresser la trajectoire consolidée sur cette base en utilisant un nombre restreint de données pour chaque portion. Par exemple, la trajectoire consolidée est décomposée en un tronçon de droite exprimé à l'aide d'une pluralité de paramètres, d'un tronçon de parabole exprimé à l'aide d'une pluralité de paramètres...

Le deuxième système d'imagerie 50 décompresse ces données pour obtenir cette trajectoire consolidée. Le deuxième système d'imagerie 50 élabore alors une représentation synthétique 67 de la trajectoire consolidée 66 et l'incorpore dans le flux d'images vidéo.

Lorsque la trajectoire consolidée vise à rejoindre une zone de poser mobile, il est possible que cette trajectoire consolidée n'aboutisse pas sur la zone de poser visible sur le premier afficheur, à l'instar de l'exemple illustré.

La figure 2 illustre par ailleurs une représentation synthétique prenant la forme d'une balle traçante.

Selon un autre aspect, le système de pilotage automatique 70 peut aussi transmettre à un deuxième afficheur 80 la trajectoire consolidée 66 et la position courante. Par contre, la trajectoire consolidée 66 et la position courante sont exprimées sous le forme de coordonnées absolues dans le référentiel terrestre.

Dès lors, le deuxième afficheur 80 affiche la trajectoire consolidée 66 et un deuxième symbole 85 représentant la zone de poser positionnée à la position courante.

Par conséquent, le premier afficheur 60 affiche une représentation de la zone de poser et la trajectoire consolidée suivie dans une monde relatif à l'aide de données relatives, alors que le deuxième afficheur 80 affiche une représentation de la zone de poser et la trajectoire consolidée suivie dans une monde absolu à l'aide de données absolues.

Ce monde absolu est représenté vu de dessus sur le deuxième afficheur. Dès lors, la trajectoire consolidée est sensiblement rectiligne.

En outre, le deuxième afficheur 80 peut afficher de manière usuelle au moins une des données suivantes : au moins un point de passage 89 prédéterminé de la trajectoire consolidée 66, un plot 87 identifiant un objet muni d'un système d'identification AIS, au moins un point 88 représentant un objet détecté par un système radar.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé d'aide au pilotage pour faciliter un atterrissage sur une zone de poser (64) avec un aéronef (1), ce procédé comportant une étape de sélection pour sélectionner ladite zone de poser (64) sur laquelle ledit aéronef (1) doit se poser,

   **caractérisé en ce que** ce procédé comporte les étapes suivantes :

   - activation d'un mode de guidage d'un système de pilotage automatique (70) pour guider automatiquement l'aéronef (1) vers la zone de poser (64) lors d'une approche,

- capture d'un flux d'images de la zone de poser avec un système d'acquisition vidéo (15) comprenant au moins une caméra (16), et transmission dudit flux d'images à un premier système d'imagerie (40) et à un deuxième système d'imagerie (50), ledit flux d'images comprenant une image réelle (94) de la zone de poser (64) à un instant de calcul courant,
- calcul avec le premier système d'imagerie (40) d'informations de position de la zone de poser à partir au moins de ladite image réelle (94), lesdites informations de position définissant une position relative de la zone de poser relativement à l'aéronef (1), et transmission desdites informations de position au système de pilotage automatique (70),
- détermination avec le système de pilotage automatique (70) :

  ∘ d'une position courante de la zone de poser à l'instant de calcul courant en injectant lesdites informations de position dans un estimateur à filtre de Kalman,
  ∘ d'une position objectif de la zone de poser qui sera atteinte par la zone de poser lorsque l'aéronef (1) se posera sur cette zone de poser avec ledit estimateur,
  ∘ d'une trajectoire consolidée (66) menant vers la position objectif de la zone de poser en fonction d'au moins un modèle d'approche mémorisé,

- transmission d'au moins la position courante et de la trajectoire consolidée au deuxième système d'imagerie (50),
- vérification avec le deuxième système d'imagerie (50) d'une présence d'une zone de poser à ladite position courante dans ladite image réelle,
- génération d'une alarme si ladite présence n'est pas vérifiée,
- affichage sur un premier afficheur (60) de l'image réelle (94) et d'un premier symbole (65) positionné à ladite position courante pour comparaison visuelle par un pilote.

2. Procédé selon la revendication 1,
**caractérisé en ce que** la position courante est exprimée au moins avec des données relatives positionnant la zone de poser relativement à l'aéronef (1), les données relatives étant transmises au deuxième système d'imagerie (50).

3. Procédé selon l'une quelconque des revendications 1 à 2,
**caractérisé en ce que** si la position courante varie entre deux instants de calcul successifs, ladite position objectif est estimée en déterminant un vecteur vitesse de déplacement de la zone de poser à l'aide des positions courantes déterminées lors desdits deux instants de calcul successifs.

4. Procédé selon l'une quelconque des revendications 1 à 3,
**caractérisé en ce que** ladite vérification avec le deuxième système d'imagerie (50) d'une présence d'une zone de poser à ladite position courante comporte une étape d'analyse avec le deuxième système d'imagerie d'une portion de l'image réelle incluant la position courante pour déterminer si une zone de poser est présente dans cette portion, ladite alarme étant générée si aucune zone de poser n'est détectée dans ladite portion de l'image réelle

5. Procédé selon l'une quelconque des revendications 1 à 3,
**caractérisé en ce que** ladite vérification avec le deuxième système d'imagerie (50) d'une présence d'une zone de poser à ladite position courante comporte les étapes de :

  - calcul avec le deuxième système d'imagerie (50) d'une image de synthèse actuelle (99) représentant la zone de poser vue de l'aéronef (1) à l'instant de calcul courant à partir de ladite position courante,
  - comparaison avec le deuxième système d'imagerie (50) de ladite image de synthèse actuelle (99) et de l'image réelle (94),

ladite alarme étant générée lorsque ladite image de synthèse actuelle (99) ne correspond pas à la zone de poser présente sur l'image réelle (94).

6. Procédé selon la revendication 5,
**caractérisé en ce que** ladite image de synthèse actuelle (99) ne correspond pas à la zone de poser (64) présente sur l'image réelle (94) si une distance (D2) séparant l'image de synthèse (99) et l'image réelle (94) est supérieure à un seuil de précision prédéterminé.

7. Procédé selon la revendication 6,

**caractérisé en ce que** ledit procédé comporte les étapes suivantes :

- comparaison de ladite distance (D2) à un seuil d'abandon prédéterminé,
- abandon de ladite approche si ladite distance (D2) dépasse ledit seuil d'abandon.

**8.** Procédé selon l'une quelconque des revendications 1 à 7,
**caractérisé en ce que** ledit deuxième système d'imagerie (50) élabore une représentation synthétique (67) de ladite trajectoire consolidée (66), ledit premier afficheur (60) affichant la représentation synthétique (67).

**9.** Procédé selon l'une quelconque des revendications 1 à 8,
**caractérisé en ce que** ledit procédé comporte les étapes suivantes :

- transmission par ledit système de pilotage automatique (70) à un deuxième afficheur (80) de ladite trajectoire consolidée (66) menant vers la zone de poser (64) dans le référentiel terrestre, et de la position courante exprimée sous le forme de coordonnées absolues dans le référentiel terrestre,
- affichage sur ledit deuxième afficheur (80) de ladite trajectoire consolidée (66) et d'un deuxième symbole (85) représentant la zone de poser positionnée à ladite position courante.

**10.** Procédé selon la revendication 9,
**caractérisé en ce que** ledit procédé comporte une étape d'affichage par le deuxième afficheur (80) d'au moins un des éléments suivants : au moins un point de passage (89) prédéterminé de ladite trajectoire consolidée (66), un plot (87) identifiant un objet muni d'un système d'identification AIS, au moins un point (88) représentant un objet détecté par un système radar.

**11.** Procédé selon l'une quelconque des revendications 1 à 10,
**caractérisé en ce que** ladite étape d'activation dudit mode de guidage comporte les étapes suivantes :

- sélection d'une zone de poser par un pilote sur proposition du premier système d'imagerie (40),
- activation du mode de guidage.

**12.** Procédé selon l'une quelconque des revendications 1 à 10,
**caractérisé en ce que** ladite étape d'activation dudit mode de guidage comporte les étapes suivantes :

- désignation d'un secteur d'atterrissage,
- activation du mode de guidage pour se diriger vers ledit secteur d'atterrissage,
- recherche d'une zone de poser,
- après détection de la zone de poser, confirmation de la zone de poser par un pilote,
- activation du mode de guidage pour se diriger vers la zone de poser.

**13.** Système d'aide au pilotage,
**caractérisé en ce que** ledit système d'aide au pilotage (10) est destiné à la mise en oeuvre dudit procédé selon l'une quelconque des revendications 1 à 12, ledit système d'aide au pilotage (10) comprenant au moins ledit premier système d'imagerie (40), ledit deuxième système d'imagerie (50), ladite au moins une caméra (16), ledit système de pilotage automatique (70), ledit premier afficheur (60).

**14.** Système d'aide au pilotage selon la revendication 13,
**caractérisé en ce que** ledit système d'aide au pilotage comprend au moins un des organes suivants : un deuxième afficheur (80), une base de données (28) incluant au moins une zone de poser, un sélecteur (90) pour sélectionner une zone de poser.

**15.** Aéronef (1) muni d'un système d'aide au pilotage,
**caractérisé en ce que** ledit système d'aide au pilotage (10) est selon l'une quelconque des revendications 13 à 14.

**Patentansprüche**

**1.** Verfahren zur Unterstützung der Flugsteuerung zur Erleichterung einer Landung auf einem Landebereich (64) mit einem Luftfahrzeug (1), wobei dieses Verfahren einen Auswahl-Schritt zum Auswählen des Landebereichs (64) umfasst, auf dem das Luftfahrzeug (1) landen muss,
**dadurch gekennzeichnet, dass** dieses Verfahren die folgenden Schritte umfasst:

- Aktivierung eines Leitmodus eines Selbststeuerungssystems (70) zum automatischen Leiten des Luftfahrzeugs (1) bei einem Anflug auf den Landebereich (64),
- Erfassung eines Flusses von Bildern des Landebereichs mit einem Video-Erfassungssystem (15), das mindestens eine Camera (16) enthält, und Übertragung des Flusses von Bildern an ein erstes Bildgebungssystem (40) und an ein zweites Bildgebungssystem (50), wobei der Fluss von Bildern ein reelles Bild (94) des Landebereichs (64) zu einem aktuellen Berechnungs-Zeitpunkt umfasst,
- Berechnung von Informationen der Position des Landebereichs mit dem ersten Bildgebungssystem (40) auf der Basis zumindest des reellen Bildes (94), wobei die Positions-Informationen eine Relativposition des Landebereichs relativ zu dem Luftfahrzeug (1) definieren, und Übertragung der Positions-Informationen an das Selbststeuerungssystem (70),
- mit dem Selbststeuerungssystem (70) Ermittlung

  ◦ einer aktuellen Position des Landebereichs zu dem aktuellen Berechnungszeitpunkt durch Einführen der Positions-Informationen in eine Schätzeinrichtung mit Kalman-Filter,
  ◦ einer Zielposition des Landebereichs mit der Schätzeinrichtung, die durch den Landebereich erreicht wird, wenn das Luftfahrzeug (1) auf diesem Landebereich landet,
  ◦ einer konsolidierten Trajektorie (66), die in Richtung auf die Zielposition des Landebereichs in Abhängigkeit von mindestens einem gespeicherten Anflug-Modell,

- Übertragung mindestens der aktuellen Position und der konsolidierten Trajektorie an das zweite Bildgebungssystem (50),
- Verifizierung eines Vorliegens eines Landebereichs an der aktuellen Position in dem reellen Bild mit dem zweiten Bildgebungssystem (50),
- Erzeugen eines Alarms, wenn das Vorliegen nicht verifiziert wird,
- Anzeige des reellen Bildes (94) und eines ersten Symbols (65) auf einer ersten Anzeigeeinrichtung (60), das an der aktuellen Position lokalisiert ist, zum visuellen Vergleich durch einen Piloten.

2. Verfahren nach Anspruch 1,
   **dadurch gekennzeichnet, dass** die aktuelle Position zumindest mit relativen Daten ausgedrückt wird, die den Landebereich relativ zu dem Luftfahrzeug (1) lokalisieren, wobei die relativen Daten an das zweite Bildgebungssystem (50) übertragen werden.

3. Verfahren nach einem der Ansprüche 1 bis 2,
   **dadurch gekennzeichnet, dass** dann, wenn sich die aktuelle Position zwischen zwei aufeinanderfolgenden Berechnungs-Zeitpunkten ändert, die Zielposition dadurch geschätzt wird, dass ein Geschwindigkeitsvektor der Verlagerung des Landebereichs mit Hilfe der aktuellen Positionen geschätzt wird, die zu den beiden aufeinanderfolgenden Berechnungs-Zeitpunkten ermittelt wurden.

4. Verfahren nach einem der Ansprüche 1 bis 3,
   **dadurch gekennzeichnet, dass** die Verifizierung eines Vorliegens eines Landebereichs an der aktuellen Position mit dem zweiten Bildgebungssystem (50) einen Schritt der Analyse eines Teils des reellen Bildes mit dem zweiten Bildgebungssystem umfasst, der die aktuelle Position enthält, um zu ermitteln, ob in diesem Teil ein Landebereich vorliegt, wobei der Alarm erzeugt wird, wenn in dem Teil des reellen Bildes kein Landebereich ermittelt wird.

5. Verfahren nach einem der Ansprüche 1 bis 3,
   **dadurch gekennzeichnet, dass** die Verifizierung eines Vorliegens eines Landebereichs an der aktuellen Position mit dem zweiten Bildgebungssystem (50) die folgenden Schritte umfasst:

   - mit dem zweiten Bildgebungssystem (50) Berechnung eines aktuellen Synthesebildes (99), das den Landebereich darstellt, der von dem Luftfahrzeug (1) zum aktuellen Berechnungs-Zeitpunkt gesehen wird, auf der Basis der aktuellen Position,
   - Vergleich des aktuellen Synthesebildes (99) und des reellen Bildes (94) mit dem zweiten Bildgebungssystem (50),

   wobei der Alarm erzeugt wird, wenn das aktuelle Synthesebild (99) nicht dem Landebereich entspricht, der auf dem reellen Bild (94) vorliegt.

6.  Verfahren nach Anspruch 5,
    **dadurch gekennzeichnet, dass** das aktuelle Synthesebild (99) nicht dem Landebereich (64) entspricht, der auf dem reellen Bild (94) vorliegt, wenn ein Abstand (D2), der das Synthesebild (99) und das reelle Bild (94) trennt, größer ist als ein vorgegebener Genauigkeits-Schwellenwert.

7.  Verfahren nach Anspruch 6,
    **dadurch gekennzeichnet, dass** das Verfahren die folgenden Schritte umfasst:

    - Vergleich des Abstands (D2) mit einem vorgegebenen Abbruch-Schwellenwert,
    - Abbruch des Anflugs, wenn der Abstand (D2) den Abbruch-Schwellenwert übersteigt.

8.  Verfahren nach einem der Ansprüche 1 bis 7,
    **dadurch gekennzeichnet, dass** das zweite Bildgebungssystem (50) eine synthetische Darstellung (67) der konsolidierten Trajektorie (66) erstellt, wobei die erste Anzeigeeinrichtung (60) die synthetische Darstellung (67) anzeigt.

9.  Verfahren nach einem der Ansprüche 1 bis 8,
    **dadurch gekennzeichnet, dass** das Verfahren die folgenden Schritte umfasst:

    - durch das Selbststeuerungssystem (70) Übertragen der konsolidierten Trajektorie (66), die im terrestrischen Bezugssystem zu dem Landebereich (64) führt, und der aktuellen Position, die im terrestrischen Bezugssystem in Form von absoluten Koordinaten ausgedrückt wird, zu einer zweiten Anzeigeeinrichtung (80),
    - Anzeige der konsolidierten Trajektorie (66) und eines zweiten Symbols (85), das den Landebereich darstellt, der an der aktuellen Position lokalisiert ist, auf der zweiten Anzeigeeinrichtung (80).

10. Verfahren nach Anspruch 9,
    **dadurch gekennzeichnet, dass** das Verfahren einen Schritt der Anzeige mindestens eines der folgenden Elemente durch die zweite Anzeigeeinrichtung (80) umfasst: mindestens einen vorgegebenen Passagepunkt (89) der konsolidierten Trajektorie (66), einen Plot (87), der ein Objekt identifiziert, das mit einem automatischen Identifikationssystem AIS ausgestattet ist, mindestens einen Punkt (88), der ein Objekt darstellt, das durch ein Radarsystem erfasst wird.

11. Verfahren nach einem der Ansprüche 1 bis 10,
    **dadurch gekennzeichnet, dass** der Schritt der Aktivierung des Leitmodus die folgenden Schritte umfasst:

    - Auswahl eines Landebereichs durch einen Piloten nach Vorschlag des ersten Bildgebungssystems (40),
    - Aktivierung des Leitmodus.

12. Verfahren nach einem der Ansprüche 1 bis 10,
    **dadurch gekennzeichnet, dass** der Schritt der Aktivierung des Leitmodus die folgenden Schritte umfasst:

    - Bezeichnung eines Landesektors,
    - Aktivierung des Leitmodus , um sich zu dem Landesektor zu leiten,
    - Suchen eines Landebereichs,
    - nach Erfassung des Landebereichs Bestätigung des Landebereichs durch einen Piloten,
    - Aktivierung des Leitmodus, um sich zu dem Landebereich zu leiten.

13. System zur Unterstützung der Flugsteuerung,
    **dadurch gekennzeichnet, dass** das System zur Unterstützung der Flugsteuerung (10) zur Durchführung des Verfahrens nach einem der Ansprüche 1 bis 12 bestimmt ist, wobei das System zur Unterstützung der Flugsteuerung (10) mindestens umfasst: das erste Bildgebungssystem (40), das zweite Bildgebungssystem (50), die mindestens eine Camera (16), das Selbststeuerungssystem (70), die erste Anzeigeeinrichtung (60).

14. System zur Unterstützung der Flugsteuerung nach Anspruch 13,
    **dadurch gekennzeichnet, dass** das System zur Unterstützung der Flugsteuerung mindestens eines der folgenden Elemente beinhaltet: eine zweite Anzeigeeinrichtung (80), eine Datenbank (28), die mindestens einen Landebereich enthält, eine Wahleinrichtung (90) zum Wählen eines Landebereichs.

**15.** Luftfahrzeug (1), das mit einem System zur Unterstützung der Flugsteuerung ausgerüstet ist, **dadurch gekennzeichnet, dass** das System zur Unterstützung der Flugsteuerung (10) ein System nach einem der Ansprüche 13 bis 14 ist.

**Claims**

**1.** Piloting assistance method for facilitating landing an aircraft (1) on a landing zone (64), the method comprising a selection step for selecting said landing zone (64) on which said aircraft (1) has to land, **characterised in that** said method comprises the following steps:

- activating a guiding mode of an automatic piloting system (70) in order to automatically guide the aircraft (1) towards the landing zone (64) during an approach,
- capturing an image stream of the landing zone by means of a video acquisition system (15) comprising at least one camera (16), and transmitting said image stream to a first imaging system (40) and to a second imaging system (50), said image stream comprising a real image (94) of the landing zone (64) at a current calculation time,
- calculating position information of the landing zone on the basis of at least said real image (94) by means of the first imaging system (40), said position information defining a relative position of the landing zone with respect to the aircraft (1), and transmitting said position information to the automatic piloting system (70),
- determining, by means of the automatic piloting system (70):

  ◦ a current position of the landing zone at the current calculation time by feeding said position information into a Kalman filter estimator,
  ◦ a target position of the landing zone which will be reached by the landing zone when the aircraft (1) lands on said landing zone, which position is determined by means of said estimator,
  ◦ a consolidated path (66) leading towards the target position of the landing zone depending on at least one stored approach model,

- transmitting at least the current position and the consolidated path to the second imaging system (50),
- verifying, by means of the second imaging system (50), that a landing zone is present at said current position in said real image,
- generating an alarm if said presence is not verified,
- displaying the real image (94) and a first symbol (65) positioned at said current position on a first display (60) for visual comparison by a pilot.

**2.** Method according to claim 1, **characterised in that** the current position is expressed at least by the relative data which position the landing zone with respect to the aircraft (1), the relative data being transmitted to the second imaging system (50).

**3.** Method according to either claim 1 or claim 2, **characterised in that**, if the current position varies between two successive calculation times, said target position is estimated by determining a travelling speed vector of the landing zone by using the current positions determined during said two successive calculation times.

**4.** Method according to any of claims 1 to 3, **characterised in that** said verification by the second imaging system (50) that a landing zone is present at said current position comprises an analysis step in which the second imaging system analyses a portion of the real image including the current position in order to determine if a landing zone is present in this portion, said alarm being generated if a landing zone is not detected in said portion of the real image.

**5.** Method according to any of claims 1 to 3, **characterised in that** said verification by the second imaging system (50) that a landing zone is present at said current position comprises the steps of:

- calculating, by means of the second imaging system (50), a current synthetic image (99) representing the landing zone viewed from the aircraft (1) at the current calculation time on the basis of said current position,
- comparing said current synthetic image (99) and the real image (94) by means of the second imaging system (50),

said alarm being generated when said current synthetic image (99) does not correspond to the landing zone present in the real image (94).

**6.** Method according to claim 5, **characterised in that** said current synthetic image (99) does not correspond to the landing zone (64) present in the real image (94) if a distance (D2) separating the synthetic image (99) and the real image (94) is greater than a predetermined accuracy threshold.

**7.** Method according to claim 6, **characterised in that** said method comprises the following steps:

- comparing said distance (D2) with a predetermined abandon threshold,
- abandoning said approach if said distance (D2) exceeds said abandon threshold.

**8.** Method according to any of claims 1 to 7, **characterised in that** said second imaging system (50) produces a synthetic representation (67) of said consolidated path (66), said first display (60) displaying the synthetic representation (67).

**9.** Method according to any of claims 1 to 8, **characterised in that** said method comprises the following steps:

- transmitting said consolidated path (66) leading towards the landing zone (64) in the terrestrial reference frame and the current position expressed in the form of absolute coordinates in the terrestrial reference frame to a second display (80) by means of said automatic piloting system (70),
- displaying said consolidated path (66) and a second symbol (85) representing the landing zone positioned at said current position on said second display (80).

**10.** Method according to claim 9, **characterised in that** said method comprises a display step in which the second display (80) displays at least one of the following elements: at least one predetermined waypoint (89) of said consolidated path (66), a blip (87) identifying an object provided with an AIS identification system, at least one point (88) representing an object detected by a radar system.

**11.** Method according to any of claims 1 to 10, **characterised in that** said step of activating said guiding mode comprises the following steps:

- the pilot selecting a landing zone from a proposal made by the first imaging system (40),
- activating the guiding mode.

**12.** Method according to any of claims 1 to 10, **characterised in that** said step of activating said guiding mode comprises the following steps:

- designating a landing region,
- activating the guiding mode in order to be steered towards said landing region,
- searching for a landing zone,
- the pilot confirming the landing zone after the landing zone has been detected,
- activating the guiding mode in order to be steered towards the landing zone.

**13.** Piloting assistance system, **characterised in that** said piloting assistance system (10) is suitable for implementing said method according to any of claims 1 to 12, said piloting assistance system (10) comprising at least said first imaging system (40), said second imaging system (50), said at least one camera (16), said automatic piloting system (70), and said first display (60).

**14.** Piloting assistance system according to claim 13, **characterised in that** said piloting assistance system comprises at least one of the following members: a second display (80), a database (28) including at least one landing zone, and a selector (90) for selecting a landing zone.

**15.** Aircraft (1) provided with a piloting assistance system, **characterised in that** said piloting assistance system (10) is a system according to either claim 13 or claim 14.

# Fig.1

# Fig.2

# Fig.3

# Fig.4

## RÉFÉRENCES CITÉES DANS LA DESCRIPTION

**Documents brevets cités dans la description**

- WO 2014169354 A
- US 2010321488 A
- US 2016378121 A
- EP 2996009 A
- FR 1601076
- US 4618989 A

**Littérature non-brevet citée dans la description**

- **D'ARNAUD LE TROTER ; SÉBASTIEN MAVROMATIS ; JEAN SEQUEIRA.** Soccer field détection in video images using color and spatial cohérence. *International Conférence on Image Analysis and Récognition Porto,* Octobre 2004